# EUROPEAN PATENT SPECIFICATION

(11) **EP 1 760 600 B1**
(45) Date of publication and mention of the grant of the patent: **30.06.2010**
(21) Application number: 06250013.7
(22) Date of filing: 04.01.2006
(51) Int. Cl.: G06F 13/40

(54) **Apparatus and method for data transfer control**
Vorrichtung und Verfahren für Datenübertragungssteuerung
Appareil et procédé de contrôle de transfert de données

(30) Priority: 31.08.2005 JP 2005252744
(43) Date of publication of application: 07.03.2007
(73) Proprietor: FUJITSU LIMITED, Kawasaki-shi, Kanagawa 211-8588 (JP)
(72) Inventor: Unno, Hideyuki, Kawasaki-shi Kanagawa 211-8588 (JP); Ukai, Masaki, Kawasaki-shi Kanagawa 211-8588 (JP); Aoki, Naozumi, Kawasaki-shi Kanagawa 211-8588 (JP)
(74) Representative: Hitching, Peter Matthew

(56) References cited:
- EP-A2- 0 859 492
- US-A1- 2004 146 059
- US-B1- 6 519 722
- US-B1- 6 535 939

## Description

### BACKGROUND OF THE INVENTION

### 1. Field of the Invention

The present invention relates to an apparatus and a method for controlling data transfer with a computer that is connected to a bus which transfers data in one direction.

### 2. Description of the Related Art

In recent years, due to progress in semiconductor packaging technology, it has become possible to package a higher computing capacity in a smaller computer node. For example, due to high-density of semiconductors, processing capacity per CPU (Central Processing Unit) LSI (Large Scale Integration) is increasing every year. Therefore, larger amount of data is input to and output from even smaller computer node.

In other words, with an increase in an amount of transfer data, a data signal line (such as bus) having even bigger band was needed for even smaller computer nodes, thereby creating a problem of a relative increase in the implementation cost of the data path.

US6535939 discloses a data processing system with configurable buses. A priority determination of bandwidth requirements is made and the configurable buses are dynamically allocated to the external components communicating with the processor chip.

In view of this problem, Japanese Patent Application Laid-open Publication No. H8-63429 discloses a bidirectional bus and an apparatus connected to a bus through which data flows in and out (hereinafter, "bidirectional bus"), in which an amount of data transfer of the bidirectional bus is monitored, and a ratio of a transfer capacity of an amount of data that is input to the apparatus and an amount of data that is output from the apparatus is controlled, thereby eliminating a need to increase a data band width of the bidirectional bus, and suppressing the implementation cost of the data path.

However, because the bidirectional bus according to the conventional technology mentioned above switches a direction of transmission, physical transmission conditions are strict, and hence, it has become difficult to sufficiently increase the transfer rate. Therefore, in recent buses that require high-rate transmission, the one directional bus needs to be used in most cases.

However, many of one directional buses that are used for data transfer between a CPU and a memory, such as an input bus and an output bus, are separate data transfer paths respectively. Therefore, using a method such as that disclosed in Japanese Patent Application Laid-open Publication No. H8-63429, it was not possible to change a data bandwidth of each bus. Consequently, with an improvement in a processing capacity of the CPU, it was necessary to increase a data band width of the one directional bus, and path cost was enormous.

Moreover, as mentioned in PC WATCH IMPRESS, [online], [searched on August 23, 2005], the Internet<URL: http//pc.watch.impress.co.jp/docs/2005/0211/kaigai155.htm>, setting a data bandwidth of the output bus to be greater than a data bandwidth of the input bus is effective for some kind of computer application. However, usually, the amount of the input data in a general computer node (particularly, a computer node that has a swap type data cache) tends to be greater than the amount of the output data, this method is not effective in a general computer node.

In other words, suppressing the implementation cost of the data path and performing efficient data transfer between the computer nodes becomes an extremely important issue for the computer node connected to the one directional bus.

### SUMMARY OF THE INVENTION

It is an object of the present invention to at least solve the problems in the conventional technology.

According to an aspect of the present invention, an apparatus for controlling data transfer performed with a computer connected to a data bus, which performs data transfer in one direction, the apparatus includes a data transfer controlling unit that controls the data transfer with the computer by setting a data bandwidth of an input bus to be greater than a data bandwidth of an output bus, where the input bus transfers data to be input to the computer, and the output bus transfers data output by the computer.

According to another aspect of the present invention, a method for controlling data transfer performed with a computer connected to a data bus, which performs data transfer in one direction, the method including acquiring data to be input to the computer; and transmitting acquired data to the computer by setting a data bandwidth of an input bus to be greater than a data bandwidth of an output bus, where the input bus transfers data to be input to the computer, and the output bus transfers data output by the computer.

According to still another aspect of the present invention, a method for controlling data transfer performed with a computer connected to a bus, which performs data transfer in one direction, the method includes acquiring data output from the computer; and transmitting acquired data to other equipment by setting a data bandwidth of an output bus to be smaller than a data bandwidth of an input bus, wherein the input bus transfers data to be input to the computer, and the output bus transfers data output by the computer.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a block diagram of a computer system according to the present embodiment;
Fig. 2 is a functional block diagram of a structure of a buffer section;
Fig. 3 is an example of a data structure of each packet in a long version transfer;
Fig. 4 is an example of a data structure of each packet in a short version transfer; and
Fig. 5 is an example of packet transfer in the long version transfer and the short version transfer.

### DETAILED DESCRIPTION OF THE PREFERRED EMBODIMENTS

Exemplary embodiments of the present invention are described below in detail with reference to the accompanying diagrams.

To start with, characteristics of the present invention are described. In the present invention, a data bandwidth of an input bus for transferring data to be input to a computer node and an output bus for transferring data that is output from the computer node is let to be asymmetric. Specifically, the data bandwidth of the input bus is kept greater than the data bandwidth of the output bus.

Here, the reason for letting the data band width of the input/output bus to be asymmetric is that a data band required in the computer node is not equal for an input and an output, and normally, there is a strong tendency that the amount of data input is more than the amount of data output. Furthermore, in a case where the computer node has a swap type data cache, this tendency is obvious.

Thus, focusing attention on data band of the input/output data that is required at the computer node, by setting the data band width of the input bus to be greater than the data band width of the output bus, it is possible to use effectively resources required for a data path, as well as to suppress an implementation cost of the data path.

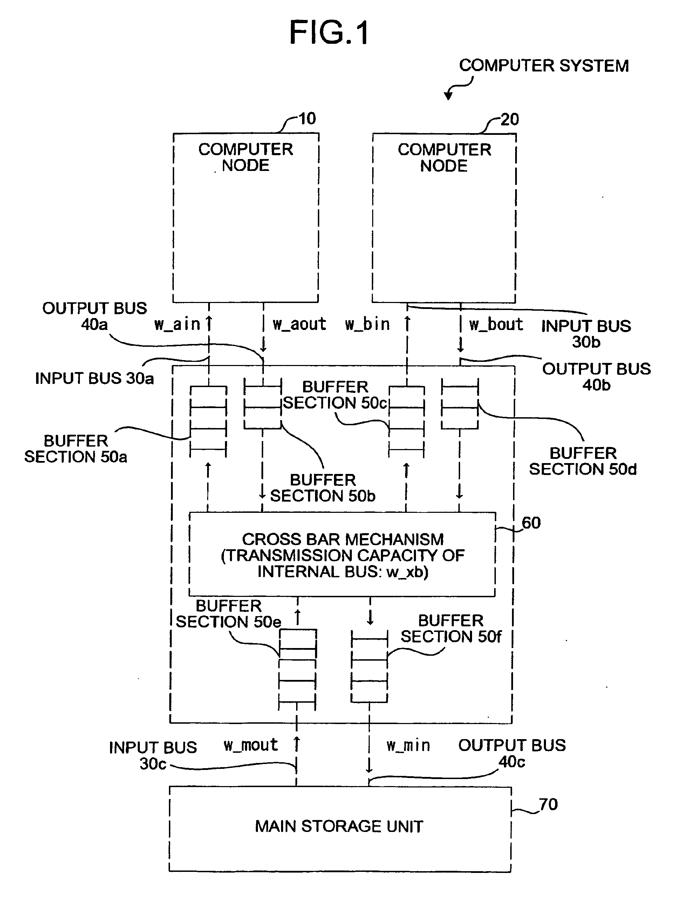

Next, a structure of a computer system according to the present embodiment is described with reference to Fig. 1. As shown in Fig. 1, the computer system includes computer nodes 10 and 20, input buses 30a to 30c, output buses 40a to 40c, buffer sections 50a to 50f, a cross bar mechanism 60, and a main storage unit 70.

The computer node 10 acquires data that is transferred from the input bus 30a, performs a predetermined calculation, and transfers output data such as calculation result either to the main storage unit 70 or to the computer node 20 using the output bus 40a. Similar to the computer node 10, the computer node 20 acquires data that is transferred from the input bus 30b, performs a predetermined calculation, and transfers output data such as calculation result either to the main storage unit 70 or to the computer node 10 using the output bus 40b.

The input buses 30a to 30c and the output buses 40a to 40c are buses for which a direction of transfer of data is one directional. Concretely, the input bus 30a transfers data from the cross bar mechanism 60 to the computer node 10, the input bus 30b transfers data from the cross bar mechanism 60 to the computer node 20, and the input bus 30c transfers data from the main storage unit 70 to the cross bar mechanism 60.

Moreover, the output bus 40a transfers data from the computer node 10 to the cross bar mechanism 60, the output bus 40b transfers data from the computer node 20 to the cross bar mechanism 60, and the output bus 40c transfers data from the cross bar mechanism 60 to the main storage unit 70.

The cross bar mechanism 60 switches the path dynamically while exchanging data between the computer nodes 10 and 20, and the main storage unit 70. The main storage unit 70 stores user data and programs that are used in the computer nodes 10 and 20. Although omitted in Fig. 1, the main storage unit 70 is connected to an auxiliary storage unit etc.

Further, if a data band width of the input bus 30a is w_ain and a data band width of the output bus 40a is w_aout, in the present invention, each data bandwidth is set such that w_ain>w_aout. Moreover, if a data bandwidth of the input bus 30b is w_bin and a data bandwidth of the output bus 40b is w_bout, in the present invention, each data band width is set such that w_bin>w_bout.

Furthermore, focusing attention on a data transfer path of the computer system shown in Fig. 1, data output from the computer node 20 and the main storage unit 70 is sometimes transferred to the computer node 10. Therefore, in the present invention, the data bandwidth of the input bus 30a is set such that w_ain>w_bout+w_mout. Here, "w_mout" is a data bandwidth of the input bus 30c.

Moreover, because data output from the computer node 10 and the main storage unit 70 is sometimes transferred to the computer node 20, in the present invention, the data band width of the input bus 30c is set as
w_bin>w_aout+w_mout.

In the present embodiment, as an example, a ratio of each data bandwidth is set as
w_ain, w_bin = 5
w_aout, w_bout = 3
w_min (data band width of the input bus 30c), w_mout=4xn (n>1)
w_xb (transfer capacity of internal bus in the cross bar mechanism) = 4.
When the ratio of each data band is set in this manner, for example, a ratio of w_ain and w_aout becomes 5 to 3.

The buffer sections 50a to 50f store data output from each unit. Further, the buffer sections 50a to 50d include a mechanism that absorbs an inconsistency due to asymmetric data bandwidth of the input buses 30a and 30b, and the output buses 40a and 40b.

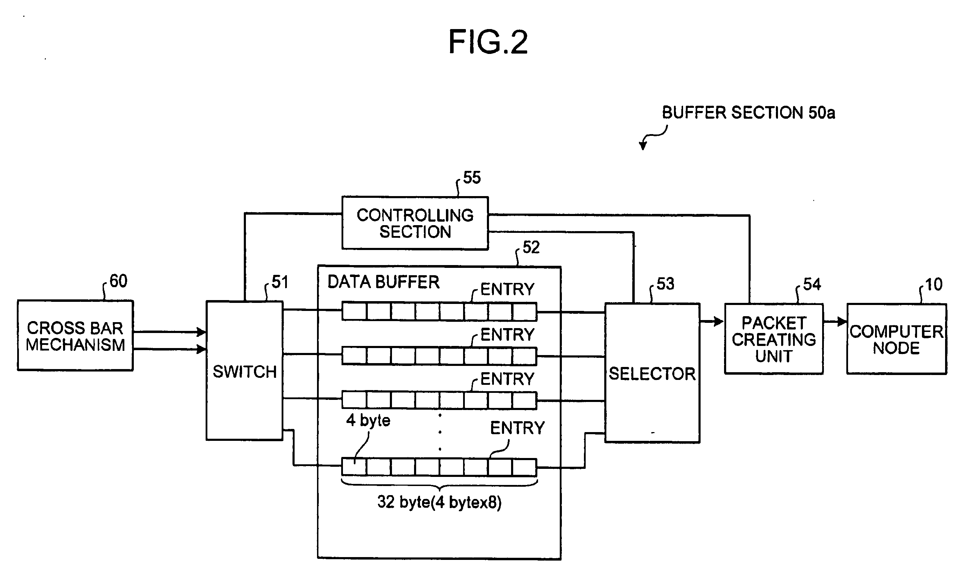

A structure of the buffer section 50a is described next. Buffer sections 50b to 50d are similar to the buffer section 50a, and the description thereof is omitted. Fig. 2 is a functional block diagram of the buffer section. As shown in Fig. 2, the buffer section 50a includes a switch 51, a data buffer 52, a selector 53, a packet creating unit 54, and a controlling section 55.

The switch 51 assigns data acquired from the cross bar mechanism 60 to various recording areas of the data buffer 52. The data buffer 52 has a plurality of storage areas, and stores data temporarily in the storage areas. Each storage area with a respective entry is indicated below. Moreover, as shown in Fig. 2, each entry can store 32 byte (4 byte x 8) data.

The selector 53 selects an entry that is subjected to data acquisition, from a plurality of entries included in the data buffer 52 and acquires data from the entry selected. The selector 53 transfers the data acquired from the entry to the packet creating unit 54.

The packet creating unit 54 creates a packet based on the data received from the selector 53, and sends the packet created to the computer node 10. Further, the packet creating unit 54 changes a transfer rate of a packet based on a data storage condition of the data buffer 52, and transfers the packet whose transfer rate is changed, to the computer node. The controlling section 55 continuously monitors the data storage condition of the data buffer 52, and the packet creating unit 54 acquires information related to the data storage condition of the data buffer 52 from the controlling section 55.

The controlling section 55 controls various units of the buffer section 50a; that is, the switch 51, the selector 53, and the packet creating unit 54. In other words, the switch 51 assigns data to each entry that is a destination for data recording, based on an instruction from the controlling section 55. The selector 53 acquires data from an entry selected, based on an instruction of the controlling section 55, and transfers the data acquired to the packet creating unit 54.

A packet created by the packet creating unit 54 is described next. In the present embodiment, the packet creating unit 54 creates two types of packets. Specifically, when no data is stored in each entry of the data buffer 52, and the switch 51 records new data in an entry, the packet creating unit 54 converts the newly recorded data as is into packets, and transmits the packets converted to the computer node 10 one after another.

For example, when the switch 51 records data as a 4 byte cycle in the entry, the packet creating unit 54 creates packets that has data of 4 byte per packet and transmits the packets created to the computer node 10. Transmission of a packet group that includes 4 byte data per packet is referred to below as a long version transfer.

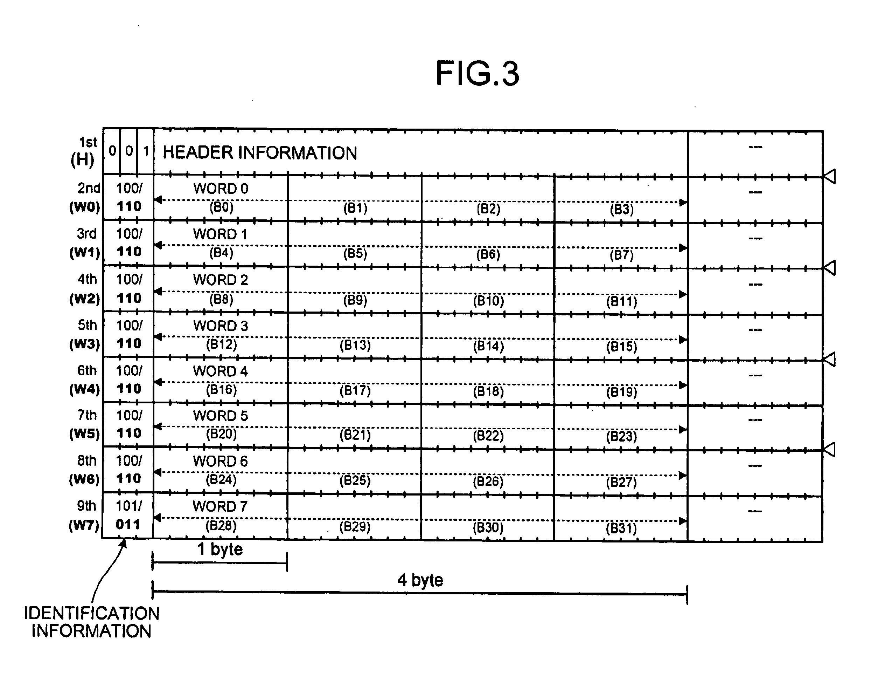

Fig. 3 is an example of a data structure of each packet in the long version transfer. In the example shown in Fig. 3, the long version transfer includes nine packets, and header information is stored in a header packet (first packet). The header information includes transfer rate identification information that enables a receiving side (for example, a computer node) to identify uniquely that each packet information shown in Fig. 3 is a long version transfer. The packet creating unit 54 creates the transfer rate identification information at the time of creating the packet, and stores in the header packet.

Moreover, at the beginning of each of the first to the ninth packets, identification information for identifying information stored in the packet is added. In other words, according to the identification information, the receiving side can judge whether data stored in the packet is header information or user data.

Another type of packet is described next. When data is stored in each entry of the data buffer 52, and the switch 51 records new data in an entry, the packet creating unit 54 increases a transfer rate of the packet.

For example, when the switch 51 records data as a 4 byte cycle in the entry (data is supposed to be stored in this entry), the packet creating unit 54 creates packets with 5 byte data per packet, and transmits the packets created to the computer node 10. Transmission of a packet group that includes 5 byte data per packet is referred to below as a short version transfer.

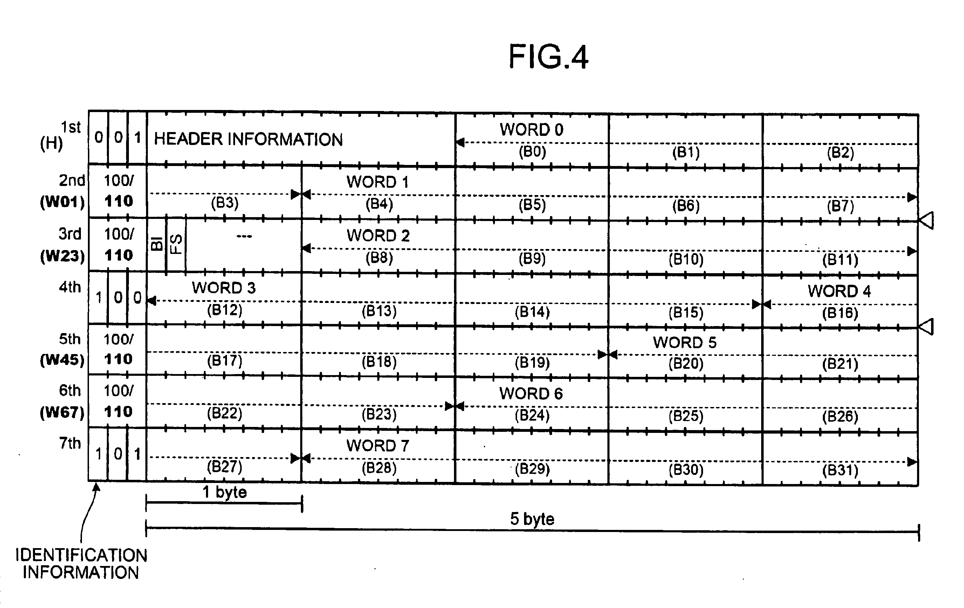

Fig. 4 is an example of a data structure of each packet in the short version transfer. In the example shown in Fig. 4, the short version transfer includes seven packets, and header information and user data is stored in a header packet (first packet). The header information includes transfer rate identification information that enables a receiving side (for example, computer node) to identify uniquely that each packet information shown in Fig. 4 is a short version transfer. The packet creating unit 54 creates the transfer rate identification information at the time of creating the packet, and stores in the header packet.

Moreover, at the beginning of each of the first to the seventh packets, identification information for identifying the information stored in the packet is added. In other words, according to the identification information, the receiving side can judge whether data stored in the packet is header information or user data (sometimes data includes header information and user data, as in packets shown in Fig. 4). Further, because data of nine packets in the long version transfer is transferred in seven packets in the short version transfer (transferred by increasing the transfer rate), user data (WORD 0 to WORD 7) is stored spreading over various packets.

For example, in Fig. 3, user data WORD 0 is stored in the second packet, and in Fig. 4, user data WORD 0 is spread over the first packet and the second packet.

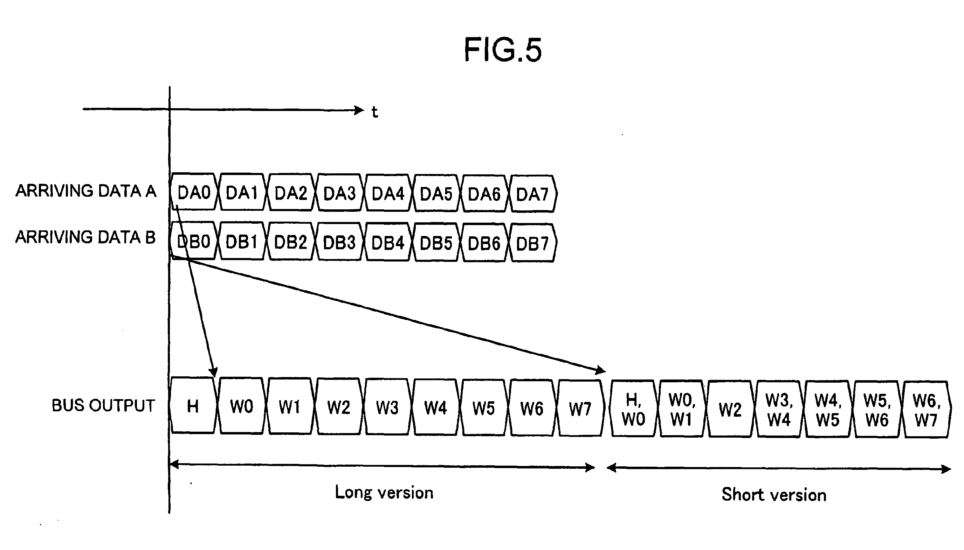

Fig. 5 is an example of packet transfer in the long version transfer and the short version transfer. As shown in Fig. 5, in a first half of the packet transfer, data is not stored in the data buffer 52, and hence, the buffer section 50a performs the packet transfer by the long version transfer. But in a second half, data is already stored in the data buffer, and hence, the buffer section 50a performs the packet transfer by the short version transfer by increasing the transfer rate.

Further, although a detail description is omitted here, the buffer sections 50b and 50d use a mechanism similar to the mechanism of the buffer section 50a, and transfer the data output from the computer nodes 10 and 20 to the cross bar mechanism 60.

In other words, the buffer sections 50b and 50d record into the data buffer the data output from the computer node 10 or 20, and based on the data storage condition of the data buffer, the packet creating unit 54 changes the transfer rate of the packet transferred to the cross bar mechanism 60.

As mentioned above, the computer system according to the present embodiment controls the data transfer in each unit by setting the data bandwidth of the input bus 30a to be greater than the data bandwidth of the output bus 40a, and the data bandwidth of the input bus 30b to be greater than the data bandwidth of the output bus 40b. Moreover, by providing the buffer section 50a and 50d to absorb the inconsistency caused due to asymmetrically setting the data bandwidth of each bus, effective use of the data path that has limited resources, and efficient data transfer with the computer node is possible.

According to an aspect of the present invention, it is possible to perform cost-effective and efficient data transmission to a computer connected to a one-directional data bus.

Moreover, it is possible to perform normal data transmission to the computer.

Furthermore, it is possible to deal appropriately with an inconsistency in the data transfer due to asymmetric data bandwidth of the input bus and the output bus.

Moreover, even when the input data is not accumulated and data to be input to the computer is acquired newly, it is possible to perform efficient data transmission to the computer.

Furthermore, even when the input data is accumulated and data to be input to the computer is acquired newly, it is possible to perform efficient data transmission to the computer.

According to another aspect of the present invention, it is possible to perform the data transmission normally from the computer to other equipment.

Moreover, in case of data transfer to the other equipment, it is possible to deal appropriately with an inconsistency in the data transfer due to asymmetric data bandwidth of the input bus and the output bus.

Furthermore, even when the input data is not accumulated and data to be input to the computer is acquired newly, it is possible to perform efficient data transmission from the computer to the other equipment.

Moreover, even when the input data is accumulated and data to be input to the computer is acquired newly, it is possible to perform efficient data transmission from the computer to the other equipment.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. An apparatus for controlling data transfer between a plurality of computers (10, 20) and a main storage unit (70) using a cross bar mechanism, each of the computers and the main storage unit having a unidirectional input bus, for inputting data from the main storage unit to a computer, and a corresponding unidirectional output bus, for outputting data from a computer to the main storage unit, the apparatus being **characterised in that** it comprises :
a data transfer controlling unit (50a - 50f, 60) operable to control the data transfer between the computers and the main storage unit by setting a data bandwidth of each said input bus to be greater than a data bandwidth of its corresponding said output bus;
a plurality of input data recording units (52) each of which is operable to record data to be input to a respective said computer, and to compensate for a difference in a transfer rate of the data to be input to that computer; and
a plurality of input data transfer controlling units (55) each of which is operable to transmit the data recorded by a respective said input data recording unit (52) to the computer concerned, and to change the transfer rate based on a storage condition of the recorded data by using two types of packets, wherein a first type of packet is used when no data is accumulated in the respective said input data recording unit (52) and new data to be input to the computer concerned is recorded, and a second type of packet, whose transfer rate is faster than that of the first type of packet, is used when data is accumulated in the respective said input data recording unit (52) and new data to be input to the computer concerned is recorded.

2. The apparatus according to claim 1, wherein
each input data transfer controlling unit (55) is operable to add to its data to be transmitted, identification information that identifies the transfer rate of that data.

3. The apparatus according to claim 1, further comprising:
a plurality of output data recording units each of which is operable to temporarily record data output by a respective said computer, and to compensate for a difference in a transfer rate of the data transferred from that computer to another equipment; and
a plurality of output data transfer controlling units each of which is operable to transmit the data recorded by a respective said output data recording unit to the other equipment concerned, and to change its transfer rate based on a storage condition of the recorded data by using two types of packets, wherein a first type of packet is used when no data is accumulated in the respective said output data recording unit and new data output from the computer concerned is recorded, and a second type of packet, whose transfer rate is faster than that of the first type of packet, is used when data is accumulated in the respective said output data recording unit, and new data output from the computer concerned is recorded.

4. The apparatus according to claim 3, wherein
each output data transfer controlling unit is operable to add to its data to be transmitted, identification information that identifies the transfer rate of that data.

5. A method for controlling data transfer between a plurality of computers (10, 20) and a main storage unit (70) using a cross bar mechanism, each of the computers and the main storage unit having a unidirectional input bus and a corresponding unidirectional output bus, the method being **characterised in that** it comprises :
acquiring data to be input to a particular one of the computers;
transmitting the acquired data to that computer by setting a data bandwidth of its input bus to be greater than a data bandwidth of its output bus; and
recording the acquired data temporarily in an input data recording unit (52) to compensate for a difference in a transfer rate of the recorded data; and
transmitting the data recorded by the input data recording unit (52) to the computer by changing the transfer rate based on a storage condition of the recorded data by using two types of packets, wherein a first type of packet is used when no data is accumulated in the input data recording unit (52), and new data to be input to the computer concerned is recorded, and a second type of packet, whose transfer rate is faster than that of the first type of packet, is used when data is accumulated in the input data recording unit (52) and new data to be input to the computer is recorded.

6. The method according to claim 5, wherein
the act of transmitting includes adding to the data to be transmitted, identification information that identifies the transfer rate of the data.

7. A method for controlling data transfer between a plurality of computers (10, 20) and a main storage unit (70) using a cross bar mechanism, each of the computers and the main storage unit having a unidirectional input bus and a corresponding unidirectional output bus, the method being **characterised in that** it comprises:
acquiring data output from a particular one of the computers;
transmitting the acquired data to another equipment by setting a data bandwidth of the particular computer's output bus to be smaller than a data bandwidth of its input bus;
recording the acquired data temporarily in an output data recording unit to compensate for a difference in a transfer rate of the recorded data; and
transmitting the data recorded by the output data recording unit to other equipment by changing the transfer rate based on a storage condition of the recorded data by using two types of packets, wherein a first type of packet is used when no data is accumulated in the output data recording unit and new data output from the computer is recorded, and a second type of packet, whose transfer rate is faster than that of the first type of packet, is used when data is accumulated in the output data recording unit and new data output from the computer is recorded.

8. The method according to claim 7, wherein
the act of transmitting includes adding to the data to be transmitted, identification information that identifies the transfer rate of the data.

## Patentansprüche

1. Vorrichtung zum Steuern der Datenübertragung zwischen einer Vielzahl von Computern (10, 20) und einer Hauptspeichereinheit (70) unter Verwendung eines Kreuzschienenmechanismus, wobei jeder der Computer und die Hauptspeichereinheit einen unidirektionalen Eingangsbus haben, um Daten von der Hauptspeichereinheit einem Computer einzugeben, und einen entsprechenden unidirektionalen Ausgangsbus, um Daten von einem Computer an die Hauptspeichereinheit auszugeben, welche Vorrichtung **dadurch gekennzeichnet ist, dass** sie umfasst:
eine Datenübertragungssteuereinheit (50a-50f, 60), die betriebsfähig ist, um die Datenübertragung zwischen den Computern und der Hauptspeichereinheit zu steuern, indem eine Datenbandbreite jedes Eingangsbusses eingestellt wird, um größer als eine Datenbandbreite seines entsprechenden Ausgangsbusses zu sein;
eine Vielzahl von Eingangsdatenaufzeichnungseinheiten (52), von denen jede betriebsfähig ist, um Daten aufzuzeichnen, die einem jeweiligen Computer einzugeben sind, und eine Differenz einer Übertragungsrate der Daten, die jenem Computer einzugeben sind, zu kompensieren; und
eine Vielzahl von Eingangsdatenübertragungssteuereinheiten (55), von denen jede betriebsfähig ist, um die durch eine jeweilige Eingangsdatenaufzeichnungseinheit (52) aufgezeichneten Daten an den betreffenden Computer zu senden und die Übertragungsrate auf der Basis einer Speicherbedingung der aufgezeichneten Daten unter Verwendung zweier Pakettypen zu verändern, wobei ein erster Pakettyp verwendet wird, wenn keine Daten in der jeweiligen Eingangsdatenaufzeichnungseinheit (52) akkumuliert sind und neue Daten, die dem betreffenden Computer einzugeben sind, aufgezeichnet werden, und ein zweiter Pakettyp, dessen Übertragungsrate schneller als jene des ersten Pakettyps ist, verwendet wird, wenn Daten in der jeweiligen Eingangsdatenaufzeichnungseinheit (52) akkumuliert sind und neue Daten, die dem betreffenden Computer einzugeben sind, aufgezeichnet werden.

2. Vorrichtung nach Anspruch 1, bei der
jede Eingangsdatenübertragungssteuereinheit (55) betriebsfähig ist, um zu ihren zu sendenden Daten Identifikationsinformationen hinzuzufügen, die die Übertragungsrate jener Daten identifizieren.

3. Vorrichtung nach Anspruch 1, ferner mit:
einer Vielzahl von Ausgangsdatenaufzeichnungseinheiten, von denen jede betriebsfähig ist, um Daten temporär aufzuzeichnen, die durch einen jeweiligen Computer ausgegeben werden, und eine Differenz einer Übertragungsrate der Daten zu kompensieren, die von jenem Computer zu einer anderen Einrichtung übertragen werden; und
einer Vielzahl von Ausgangsdatenübertragungssteuereinheiten, von denen jede betriebsfähig ist, um die durch eine jeweilige Ausgangsdatenaufzeichnungseinheit aufgezeichneten Daten an die betreffende andere Einrichtung zu senden und ihre Übertragungsrate auf der Basis einer Speicherbedingung der aufgezeichneten Daten unter Verwendung zweier Pakettypen zu verändern, wobei ein erster Pakettyp verwendet wird, wenn keine Daten in der jeweiligen Ausgangsdatenaufzeichnungseinheit akkumuliert sind und neue Daten, die von dem betreffenden Computer ausgegeben werden, aufgezeichnet werden, und ein zweiter Pakettyp, dessen Übertragungsrate schneller als jene des ersten Pakettyps ist, verwendet wird, wenn Daten in der jeweiligen Ausgangsdatenaufzeichnungseinheit akkumuliert sind und neue Daten, die von dem betreffenden Computer ausgegeben werden, aufgezeichnet werden.

4. Vorrichtung nach Anspruch 3, bei der
jede Ausgangsdatenübertragungssteuereinheit betriebsfähig ist, um zu ihren zu sendenden Daten Identifikationsinformationen hinzuzufügen, die die Übertragungsrate jener Daten identifizieren.

5. Verfahren zum Steuern der Datenübertragung zwischen einer Vielzahl von Computern (10, 20) und einer Hauptspeichereinheit (70) unter Verwendung eines Kreuzschienenmechanismus, wobei jeder der Computer und die Hauptspeichereinheit einen unidirektionalen Eingangsbus und einen entsprechenden unidirektionalen Ausgangsbus haben, welches Verfahren **dadurch gekennzeichnet ist, dass** es umfasst:
Erfassen von Daten, die einem besonderen der Computer einzugeben sind;
Senden der erfassten Daten an jenen Computer, indem eine Datenbandbreite seines Eingangsbusses eingestellt wird, um größer als eine Datenbandbreite seines Ausgangsbusses zu sein; und
temporäres Aufzeichnen der erfassten Daten in einer Eingangsdatenaufzeichnungseinheit (52), um eine Differenz einer Übertragungsrate der aufgezeichneten Daten zu kompensieren; und
Senden der durch die Eingangsdatenaufzeichnungseinheit (52) aufgezeichneten Daten an den Computer, indem die Übertragungsrate auf der Basis einer Speicherbedingung der aufgezeichneten Daten unter Verwendung zweier Pakettypen verändert wird, wobei ein erster Pakettyp verwendet wird, wenn keine Daten in der Eingangsdatenaufzeichnungseinheit (52) akkumuliert sind und neue Daten, die dem betreffenden Computer einzugeben sind, aufgezeichnet werden, und ein zweiter Pakettyp, dessen Übertragungsrate schneller als jene des ersten Pakettyps ist, verwendet wird, wenn Daten in der Eingangsdatenaufzeichnungseinheit (52) akkumuliert sind und neue Daten, die dem betreffenden Computer einzugeben sind, aufgezeichnet werden.

6. verfahren nach Anspruch 5, bei dem
die Aktion zum Senden das Hinzufügen von Identifikationsinformationen, die die Übertragungsrate der Daten identifizieren, zu den zu sendenden Daten enthält.

7. Verfahren zum Steuern der Datenübertragung zwischen einer Vielzahl von Computern (10, 20) und einer Hauptspeichereinheit (70) unter Verwendung eines Kreuzschienenmechanismus, wobei jeder der Computer und die Hauptspeichereinheit einen unidirektionalen Eingangsbus und einen entsprechenden unidirektionalen Ausgangsbus haben, welches Verfahren **dadurch gekennzeichnet ist, dass** es umfasst:
Erfassen von Daten, die von einem besonderen der Computer ausgegeben werden;
Senden der erfassten Daten an eine andere Einrichtung, indem eine Datenbandbreite des Ausgangsbusses des besonderen Computers eingestellt wird, um kleiner als eine Datenbandbreite seines Eingangsbusses zu sein;
temporäres Aufzeichnen der erfassten Daten in einer Ausgangsdatenaufzeichnungseinheit, um eine Differenz einer Übertragungsrate der aufgezeichneten Daten zu kompensieren; und
Senden der durch die Ausgangsdatenaufzeichnungseinheit aufgezeichneten Daten an die andere Einrichtung, indem die Übertragungsrate auf der Basis einer Speicherbedingung der aufgezeichneten Daten unter Verwendung zweier Pakettypen verändert wird, wobei ein erster Pakettyp verwendet wird, wenn keine Daten in der Ausgangsdatenaufzeichnungseinheit akkumuliert sind und neue Daten, die von dem Computer ausgegeben werden, aufgezeichnet werden, und ein zweiter Pakettyp, dessen Übertragungsrate schneller als jene des ersten Pakettyps ist, verwender wird, wenn Daten in der Ausgangsdatenaufzeichnungseinheit akkumuliert sind und neue Daten, die von dem Computer ausgegeben werden, aufgezeichnet werden.

8. Verfahren nach Anspruch 7, bei dem
die Aktion zum Senden das Hinzufügen von Idcntifikationsinformationen, die die Ubertragungsrate der Daten identifizieren, zu den zu sendenden Daten enthält.

## Revendications

1. Appareil de contrôle de transfert de données entre une pluralité d'ordinateurs (10, 20) et une unité de stockage principale (70) en utilisant un mécanisme à barres croisées, chacun des ordinateurs et l'unité de stockage principale possédant un bus d'entrée unidirectionnel, pour entrer des données de l'unité de stockage principale dans un ordinateur, et un bus de sortie unidirectionnel correspondant, pour délivrer des données d'un ordinateur à l'unité de stockage principale, l'appareil étant **caractérisé en ce qu'**il comporte :
une unité de contrôle de transfert de données (50a-50f, 60) fonctionnant pour contrôler le transfert de données entre les ordinateurs et l'unité de stockage principale en déterminant qu'une largeur de bande de données de chaque bus d'entrée soit plus grande qu'une largeur de bande de données de son bus de sortie correspondant ;
une pluralité d'unités d'enregistrement de données d'entrée (52) dont chacune fonctionne pour enregistrer des données à entrer dans un ordinateur respectif, et pour compenser une différence dans un taux de transfert de données à entrer dans cet ordinateur ; et
une pluralité d'unités de contrôle de transfert de données d'entrée (55) dont chacune fonctionne pour transmettre les données enregistrées par une unité d'enregistrement de données d'entrées respective (52) à l'ordinateur concerné, et pour changer le taux de transfert en fonction d'une condition de stockage des données enregistrées en utilisant deux types de paquets, où un premier type de paquets est utilisé lorsqu'aucune donnée n'est accumulée dans l'unité d'enregistrement de données d'entrées respective (52) et que de nouvelles données à entrer dans l'ordinateur concerné sont enregistrées, et un second type de paquets, dont le taux de transfert est plus rapide que celui du premier type de paquets, est utilisé lorsque des données sont accumulées dans l'unité d'enregistrement de données d'entrées respective (52) et que de nouvelles données à entrer dans l'ordinateur concerné sont enregistrées.

2. Appareil selon la revendication 1, dans lequel
chaque unité de contrôle de transfert de données d'entrée (55) fonctionne pour ajouter à ses données à transmettre une information d'identification qui identifie le taux de transfert de ces données.

3. Appareil selon la revendication 1, comportant en outre :
une pluralité d'unités d'enregistrement de données de sortie dont chacune fonctionne pour enregistrer temporairement des données délivrées par un ordinateur respectif, et pour compenser une différence dans le taux de transfert des données transférées de cet ordinateur vers un autre équipement ; et
une pluralité d'unités de contrôle de transfert de données de sortie dont chacune fonctionne pour transmettre les données enregistrées par une unité d'enregistrement de données de sortie respective vers un autre équipement concerné, et pour changer son taux de transfert en fonction d'une condition de stockage des données enregistrées en utilisant deux types de paquets, où un premier type de paquets est utilisé lorsqu'aucune donnée n'est accumulée dans l'unité d'enregistrement de données de sortie respective et que de nouvelles données délivrées depuis l'ordinateur concerné sont enregistrées, et un second type de paquets, dont le taux de transfert est plus rapide que le premier type de paquets, est utilisé lorsque des données sont accumulées dans l'unité d'enregistrement de données de sortie respective, et que de nouvelles données délivrées depuis l'ordinateur concerné sont enregistrées.

4. Appareil selon la revendication 3, dans lequel
chaque unité de contrôle de transfert de données de sortie fonctionne pour ajouter à ses données à transmettre une information d'identification qui identifie le taux de transfert de ces données.

5. Procédé de contrôle de transfert de données entre une pluralité d'ordinateurs (10, 20) et une unité de stockage principale (70) en utilisant un mécanisme à barres croisées, chacun des ordinateurs et l'unité de stockage principale présentant un bus d'entrée unidirectionnel et un bus de sortie unidirectionnel correspondant, le procédé étant **caractérisé en ce qu'**il comporte :
l'acquisition de données à entrer dans l'un particulier des ordinateurs ;
la transmission des données acquises à cet ordinateur en déterminant qu'une largeur de bande de données de son bus d'entrée soit plus grande qu'une largeur de bande de données de son bus de sortie ; et
l'enregistrement des données acquises temporairement dans une unité d'enregistrement de données (52) pour compenser une différence dans un taux de transfert des données enregistrées ; et
la transmission des données enregistrées par l'unité d'enregistrement de données d'entrée (52) à l'ordinateur en changeant le taux de transfert en fonction d'une condition de stockage des données enregistrées en utilisant deux types de paquets, où un premier type de paquets est utilisé lorsqu'aucune donnée n'est accumulée dans l'unité d'enregistrement de données d'entrée (52), et que de nouvelles données à entrer dans l'ordinateur concerné sont enregistrées, et un second type de paquets, dont le taux de transfert est plus rapide que celui du premier type de paquets, est utilisé lorsque des données sont accumulées dans l'unité d'enregistrement de données d'entrée (52) et que des nouvelles données à entrer dans l'ordinateur sont enregistrées.

6. Procédé selon la revendication 5, dans lequel
l'acte de transmission inclut l'ajout aux données à transmettre d'une information d'identification qui identifie le taux de transfert des données.

7. Procédé pour contrôler un transfert de données entre une pluralité d'ordinateurs (10, 20) et une unité de stockage principale (70) en utilisant un mécanisme à barres croisées, chacun des ordinateurs et l'unité de stockage principale présentant un bus d'entrée unidirectionnel et un bus de sortie unidirectionnel correspondant, le procédé étant **caractérisé en ce qu'**il comporte :
l'acquisition de données délivrées depuis l'un particulier des ordinateurs ;
la transmission des données acquises à un autre équipement en déterminant qu'une largeur de bande de données du bus de sortie de l'ordinateur particulier doit être plus petite qu'une largeur de bande de données de son bus d'entrée ;
l'enregistrement des données acquises temporairement dans une unité d'enregistrement de données de sortie pour compenser une différence dans un taux de transfert des données enregistrées ; et
la transmission des données enregistrées par l'unité d'enregistrement de données de sortie à un autre équipement en changeant le taux de transfert en fonction d'une condition de stockage des données enregistrées en utilisant deux types de paquets, où un premier type de paquets est utilisé lorsqu'aucune donnée n'est accumulée dans l'unité d'enregistrement de données de sortie et que de nouvelles données délivrées depuis l'ordinateur sont enregistrées, et un second type de paquets, dont le taux de transfert est plus rapide que celui du premier type de paquets, est utilisé lorsque des données sont accumulées dans l'unité d'enregistrement de données de sortie et que de nouvelles données délivrées depuis l'ordinateur sont enregistrées.

8. Procédé selon la revendication 7, dans lequel
l'acte de transmission comprend l'ajout aux données à transmettre d'une information d'identification qui identifie le taux de transfert des données.
